# FASCICULE DE BREVET EUROPEEN

(11) **EP 3 283 415 B1**
(45) Date de publication et mention de la délivrance du brevet: **22.09.2021**
(21) Numéro de dépôt: 16723406.1
(22) Date de dépôt: 12.04.2016
(51) Int. Cl.: B65G 47/14, B29C 49/42

(54) **PROCEDE D'ALIGNEMENT ET DE REDRESSEMENT DE PREFORMES PAR CENTRIFUGATION ET DISPOSITIF ASSOCIE**
VERFAHREN ZUR AUSRICHTUNG UND AUFRICHTUNG VON VORFORMEN DURCH ZENTRIFUGATION UND ZUGEHÖRIGE VORRICHTUNG
METHOD FOR ALIGNING AND RIGHTING PREFORMS BY MEANS OF CENTRIFUGATION, AND ASSOCIATED DEVICE

(30) Priorité: 16.04.2015 FR 1553372
(43) Date de publication de la demande: 21.02.2018
(73) Titulaire: Sidel Participations, 76930 Octeville-sur-Mer (FR)
(72) Inventeur: DOUDEMENT, Denis, 76930 Octeville-sur-mer (FR); DEBRIS, Anthony, 76930 Octeville-sur-mer (FR); WILLIG, Frédéric, 76930 Octeville-sur-mer (FR); MAZO, Eric, 76930 Octeville-sur-mer (FR)
(74) Mandataire: Sidel Group
(86) Numéro de dépôt international: PCT/FR2016/050834
(87) Numéro de publication internationale: WO 2016/166459

(56) Documents cités:
- EP-A1- 1 690 813
- EP-A1- 2 048 097
- DE-A1-102005 048 126
- DE-A1-102011 050 843
- DE-T2-602004 001 132

## Description

### DOMAINE TECHNIQUE DE L'INVENTION

L'invention concerne un procédé d'alignement en une file et de redressement de préformes selon la revendication 1 et un dispositif d'alignement en une file et de redressement de préformes selon la revendication 3.

### ARRIERE PLAN TECHNIQUE DE L'INVENTION

Le procédé et le dispositif associé sont destinés à être mis en oeuvre dans une installation de fabrication de récipients en matériau thermoplastique et notamment en polyéthylène téréphtalate (PET) par formage, notamment par soufflage ou étirage-soufflage, de préformes. Une telle installation permet de produire des récipients en très grande série à des cadences très élevées, par exemple supérieures à 85000 bouteilles par heure.

Selon une technique bien connue, de tels récipients sont produits en deux étapes principales. Dans une première étape, on procède au moulage par injection d'une préforme en PET. Cette préforme comporte un corps sensiblement tubulaire qui est fermé à l'une de ses extrémités axiales, l'extrémité opposée étant ouverte par l'intermédiaire d'un col. Le col présente, dès cette opération de moulage par injection, la forme définitive du col du récipient. Généralement, le col du récipient comporte un filetage.

La préforme comporte généralement une face annulaire de support qui fait saillie radialement vers l'extérieur par rapport au reste du corps et qui est orientée axialement vers l'extrémité fermée du corps. Une telle face de support est par exemple portée par une collerette de support annulaire qui s'étend radialement en saillie vers l'extérieur par rapport au reste de la préforme et qui est agencée à la base du col.

Il existe des installations dans lesquelles les préformes, une fois injectées, sont directement transmises vers la station de formage, chaque préforme étant transportée individuellement.

Toutefois, dans de nombreux cas, les préformes sont fabriquées par injection en un premier endroit et sont moulées par soufflage à la forme définitive du récipient en un second endroit sur une installation de fabrication spécifique. Une telle technologie permet de procéder à l'opération de moulage par soufflage le plus près possible du lieu d'embouteillage, l'opération d'injection pouvant être effectuée en n'importe quel endroit. En effet, il est relativement aisé et peu coûteux de transporter des préformes de taille réduite, tandis que transporter des récipients après soufflage présente l'inconvénient d'être économiquement peu rentable du fait de leur volume très important.

Dans le cas où la station d'injection et l'installation de fabrication par formage sont deux machines totalement indépendantes, les préformes sont généralement livrées en vrac. La station de soufflage dispose donc d'un dispositif d'alimentation en préformes qui est équipé d'un dispositif d'alignement en une file et de redressement des préformes. La présente invention concerne un tel dispositif.

Selon un premier dispositif d'alignement et de redressement de préformes connu de l'état de la technique, les préformes sont déversées en vrac dans un bac. Elles sont prélevées de ce bac par un tapis élévateur qui, à son tour, vient déverser les préformes, selon un rythme préétabli, à l'extrémité supérieure de rouleaux orienteurs, aussi appelés rouleaux d'alignement. Ces deux rouleaux d'alignement sont inclinés par rapport à l'horizontale et ils sont sensiblement parallèles l'un à l'autre. Les deux rouleaux sont entraînés en rotation selon des sens opposés, et sont écartés l'un de l'autre de manière à laisser subsister un intervalle qui est de dimension légèrement supérieure à la dimension des corps des préformes. L'écartement des deux rouleaux d'alignement est tel que l'espace transversal entre les deux rouleaux est inférieur à la dimension de la collerette de support située à la base du col.

Les rouleaux orienteurs sont configurés de telle manière que, sous l'effet de la gravité, les préformes sont placées entre les deux rouleaux. Ainsi, par simple gravité, chaque préforme tend à se disposer entre les deux rouleaux, de manière à être retenue en appui par sa collerette sur les rouleaux tout en ayant son corps pendant vers le bas entre les deux rouleaux. Le mouvement de rotation contraire des deux rouleaux et leur inclinaison assure d'une part l'alignement en une file des préformes redressées et d'autre part, le glissement des préformes vers le bas des rouleaux orienteurs où elles sont ensuite récupérées dans une glissière d'alimentation, elle-même reliée à l'installation de soufflage.

Les préformes ainsi alignées et redressées sont accumulées dans la glissière d'alimentation qui alimente généralement un four de chauffage pour mettre les préformes à température adaptée pour être formées.

Un tel dispositif d'alimentation présente l'avantage de pouvoir aligner et redresser les préformes à une cadence compatible avec la cadence de l'installation de fabrication.

Cependant, ce dispositif connu est très encombrant à la fois horizontalement et verticalement. En effet, pour assurer le redressement efficace des préformes, les rouleaux présentent généralement une grande longueur. Par ailleurs, de tels dispositifs peuvent mesurer plus de 5 m de hauteur.

On a déjà proposé un dispositif d'alignement et de redressement moins encombrant comportant un bol de centrifugeuse. Les préformes sont jetées en vrac sur un plateau tournant formant le fond du bol. Les préformes sont ensuite projetées par la force centrifuge contre une rambarde périphérique. Un espace vertical réservé entre la rambarde et le plateau tournant permet le passage du corps des préformes tout en les retenant par leur collerette. Sous l'effet de la force centrifuge, les préformes sont ainsi alignées à la périphérie du bol, avec leur axe principal disposé selon une orientation sensiblement radiale par rapport au centre du bol. Les préformes présentent ainsi un axe qui s'étend sensiblement orthogonalement à la fois à la direction de la gravité et à la direction de déplacement des préformes.

Les préformes ainsi alignées et orientées sont ensuite guidées vers une sortie tangentielle du bol sous l'effet du mouvement de rotation du plateau tournant.

Avant leur sortie ou après leur sortie, les préformes sont redressées de manière que leur axe principal soit orienté verticalement pour pouvoir être prises en charge par une glissière de défilement, généralement horizontale, le long de laquelle elles ne sont plus soumises à la force centrifuge.

Les préformes sont soutenues par leur collerette qui repose sur deux points d'appui diamétralement opposés. Ces deux points d'appui sont alignés orthogonalement au sens de déplacement des préformes.

De ce fait, le basculement des préformes entraîne leur oscillation en roulis entre les deux rails de la glissière. Toutefois, l'axe principal de chaque préforme basculant dans le même plan que les points d'appui, des préformes risquent de ne plus être guidées que par un point d'appui, voire de sauter hors de contact des rails. Un tel mouvement, s'il n'est pas contrôlé, risque de provoquer un glissement de ces préformes qui, au mieux, tomberont de la glissière, ou au pire, se bloqueront en stoppant le défilement des préformes suivantes. Un tel blocage est susceptible de provoquer l'arrêt temporaire de l'installation de fabrication entière.

Le redressement des préformes nécessite la présence de guides de corps de forme complexe et adaptée à la morphologie de chaque modèle de préforme pour permettre un guidage permanent et stable de chaque préforme durant le redressement. De telles pièces de guidage sont complexes et onéreuses à réaliser.

En outre, lorsque l'installation de fabrication est destinée à être utilisée avec différents modèles de préformes en fonction des récipients à obtenir, il est nécessaire de disposer de pièces de guidage adaptées pour chacun des modèles susceptibles d'être utilisés. Le coût du dispositif s'en trouve augmenté.

De plus, les opérations de changement de pièces de guidage intervenant lors de chaque changement de modèle de préforme sont longues et fastidieuses. Le temps d'arrêt prolongé du dispositif dû à ce changement est coûteux pour le fabricant.

Le document EP 1 690 813 A1 divulgue un procédé d'alignement en une file et de redressement de préformes selon le préambule de la revendication 1 et un dispositif d'alignement en une file et de redressement de préformes selon le préambule de la revendication 3.

### BREF RESUME DE L'INVENTION

L'invention propose un procédé d'alignement en une file et de redressement de préformes selon la revendication 1 et un dispositif d'alignement en une file et de redressement de préformes selon la revendication 3.

Selon une autre caractéristique du procédé, les préformes redressées sont entraînées en rotation autour de leur axe principal par frottement contre un bord externe du plateau tournant, les préformes étant ainsi déplacées autour du bol dans le sens de rotation du plateau tournant, par roulement contre la rambarde périphérique.

Selon d'autres caractéristiques du dispositif :
- au moins à la périphérie du premier secteur déterminé du bol, la rambarde s'étend verticalement au-dessus du plateau tournant ;
- sur un deuxième secteur angulaire du bol, agencé en aval du premier secteur angulaire selon le sens de rotation du plateau tournant, le bol présente un interstice périphérique formé par écartement radial de la rambarde par rapport au bord externe du plateau tournant, ledit interstice présentant une largeur radiale dont la valeur est comprise entre le diamètre du corps et le diamètre de la face de support pour permettre le basculement du corps des préformes sous le niveau du plateau tournant à travers ledit interstice, la face de support étant destinée à être soutenue de manière conjointe par le plateau tournant et par la rambarde ;
- la rambarde présente un rail de support de la face de support qui s'étend au moins sur le deuxième secteur angulaire du bol, le rail s'étendant au même niveau que le plateau tournant pour délimiter extérieurement l'interstice ;
- le bord externe du plateau tournant et/ou la rambarde comportent une bande de roulement qui présente un coefficient de frottement adapté pour permettre le roulement sans glissement de la préforme contre la bande de roulement ;
- le dispositif comporte un convoyeur qui est raccordé tangentiellement au plateau tournant à un passage de sortie des préformes redressées ouvert dans la rambarde en aval du deuxième secteur déterminé ;
- le convoyeur est formé par une glissière horizontale formée d'un rail externe qui prolonge le rail de la rambarde et d'un rail parallèle interne qui prolonge tangentiellement le bord externe du plateau tournant, les rails étant écartés de manière à supporter une préforme redressée par sa face de support ;
- les préformes redressées qui sont transférées sur le convoyeur sont mues par un dispositif de soufflerie.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente schématiquement un dispositif d'alignement et de redressement de préformes comportant un bol de centrifugeuse conformément aux enseignements de l'invention ;
- la figure 2 est une vue de face qui représente une préforme adaptée pour être utilisée avec le dispositif de la figure 1, l'axe de la préforme étant ici orienté verticalement ;
- la figure 3 est une vue de dessus qui représente le bol de centrifugeuse de la figure 1 ;
- la figure 4 est une vue en coupe radiale d'un secteur d'alignement du bol de centrifugeuse de la figure 1, qui représente la rambarde périphérique et le plateau tournant du bol de centrifugeuse ainsi qu'une préforme alignée ;
- la figure 5 est une vue en perspective qui représente un déversoir du dispositif de la figure 1 ;
- la figure 6 est une vue de dessus qui représente une partie du secteur d'alignement du bol de centrifugeuse, ainsi que les différentes étapes du parcours d'une préforme déversée dans le bol de centrifugeuse ;
- la figure 7 est une vue en coupe radiale d'un secteur de redressement du bol de centrifugeuse de la figure 1, qui représente la rambarde périphérique et le plateau tournant du bol de centrifugeuse ainsi qu'une préforme alignée et redressée ;
- la figure 8 est une vue schématique selon une direction radiale, qui représente une préforme alignée le long de la rambarde dans le secteur d'alignement du bol de centrifugeuse de la figure 1 ;
- la figure 9 est une vue de dessus de la figure 8 ;
- la figure 10 est une vue similaire à celle de la figure 8 qui représente la préforme de la figure 8 en cours de redressement au début du secteur de redressement du bol de centrifugeuse de la figure 1 ;
- la figure 11 est une vue de dessus de la figure 10 ;
- la figure 12 est une vue similaire à celle de la figure 10, qui représente la préforme de la figure 10 redressée dans le secteur de redressement du bol de centrifugeuse de la figure 1 ;
- la figure 13 est une vue de dessus de la figure 12 ;
- la figure 14 est une vue de dessus, qui représente une zone du bol de centrifugeuse de la figure 1 située à cheval sur le secteur de redressement et sur un secteur de triage et qui comporte une roue démêleuse primaire en train d'écarter une préforme mal alignée ;
- la figure 15 est une vue en coupe radiale du bol passant par l'axe de rotation de la roue démêleuse primaire, qui représente la roue démêleuse primaire de la figure 14 ;
- la figure 16 est une vue de dessus, qui représente une partie aval du secteur de triage du bol de centrifugeuse de la figure 1 et qui comporte une roue démêleuse secondaire en train d'écarter une préforme mal alignée ;
- la figure 17 est une vue en coupe radiale du bol passant par l'axe de rotation de la roue démêleuse secondaire, qui représente la roue démêleuse secondaire de la figure 16.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations locales suivantes pour chaque préforme présente dans le bol de centrifugeuse du dispositif :
- radiale "R" dirigée de l'intérieur vers l'extérieur depuis l'axe de rotation du plateau tournant ;
- tangentiel "T" qui est orthogonale à la direction radiale "R" et qui s'étend dans le plan du plateau tournant, dirigée d'amont en aval selon le sens de rotation du plateau tournant ;
- verticale "V" dirigée de bas en haut selon le sens inverse de la gravité terrestre.

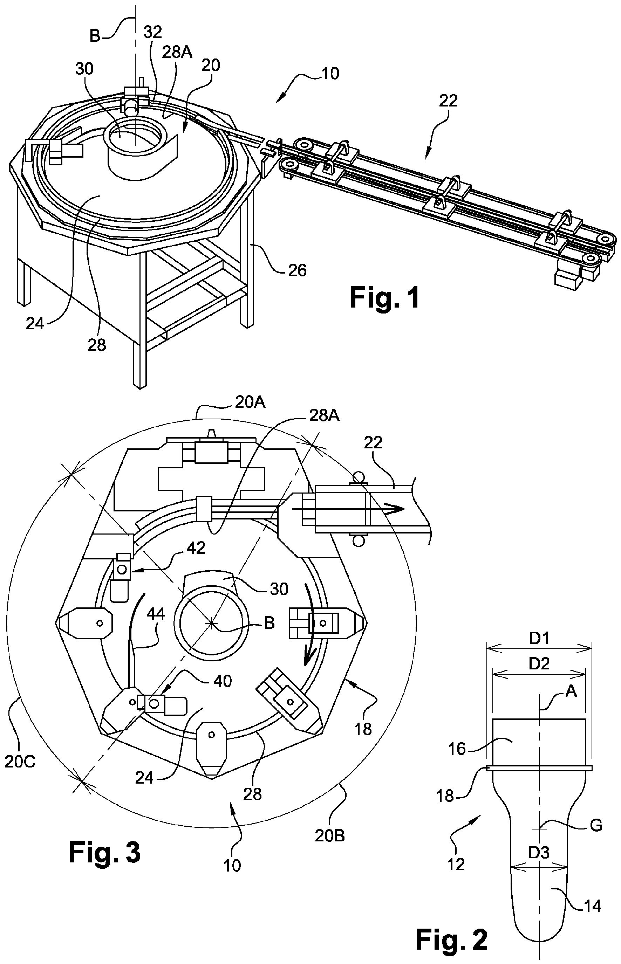

On a représenté à la figure 1 un dispositif 10 d'alignement en une file et de redressement de préformes 12 destiné à faire partie d'une installation (non représentée) de fabrication de récipients en matériau thermoplastique par formage, notamment par soufflage ou par étirage-soufflage.

Un exemple de préforme 12 destinée à être utilisée avec le dispositif 10 est illustré à la figure 2. Une telle préforme 12 est réalisée en matériau thermoplastique, ici en PET. Elle est classiquement obtenue par moulage par injection. Elle présente une forme sensiblement axisymétrique autour d'un axe "A" principal représenté verticalement à la figure 2.

Elle comporte un corps 14 en forme de tube allongé selon un axe "A" principal, qui présente une première extrémité axiale fermée et une seconde extrémité, opposée, représentée en haut à la figure 2, avec un col 16 ouvert axialement.

La préforme 12 comporte aussi une face 18 annulaire de support qui est orientée axialement vers l'extrémité fermée de la préforme 12. Cette face18 annulaire de support fait saillie radialement par rapport au reste du corps 14 et est agencée au-dessus d'un centre "G" de gravité de la préforme 12. Le terme "annulaire" signifie que la face de support fait le tour de la préforme 12 soit de manière continue, soit de manière discontinue. Dans ce dernier cas, la face annulaire est par exemple formée de segments disjoints qui font le tour de la préforme, mais qui sont néanmoins suffisamment rapprochés pour que la préforme puisse être soutenue entre deux supports diamétralement opposés quelle que soit sa position autour de son axe principal.

Dans l'exemple représenté, la base du col 16, à la jonction avec le corps 14, présente une collerette qui s'étend radialement en saillie par rapport au reste de la préforme 12. La face inférieure de la collerette forme ainsi ladite face 18 de support.

En variante, la collerette peut être agencée ailleurs qu'à la base du col, par exemple au niveau du buvant.

Selon une autre variante, la face de support est formée par une face inférieure d'un filetage du col.

Selon encore une autre variante, la face de support est rapportée sur la préforme, par exemple par l'intermédiaire d'un bouchon.

Le diamètre "D1" externe de la face 18 de support, dans le cas présent de la collerette, est ainsi supérieur au diamètre "D2" externe maximal du corps 14. Dans l'exemple représenté à la figure 2, le tronçon d'extrémité fermée du corps 14 présente ici un diamètre "D3" externe minimal.

Le col 16 présente sa forme définitive, tandis que le corps 14 est destiné à être étiré radialement (par soufflage) et axialement lors d'une opération ultérieure de formage pour former le corps du récipient fini.

En outre, le poids du corps 14 des préformes 12 utilisées est supérieur au poids de leur col 16, incluant celui de la collerette. Ainsi, le centre "G" de gravité de la préforme 12 est situé sous la face 18 de support en référence à la figure 2. De la sorte, une préforme 12 soutenue par sa face 18 de support en reposant sur deux supports diamétralement opposés s'orientera naturellement par gravité col 16 en haut.

L'exemple représenté à la figure 2 est non limitatif. On comprendra que le dispositif 10 et le procédé associé sont destinés à être appliqués à tous types de préformes 12 présentant une face 18 de support, faisant saillie radialement par rapport au reste du corps 14, et présentant un centre de gravité décalé axialement vers le corps par rapport à ladite face 18 de support.

En revenant à la figure 1, le dispositif 10 comporte principalement un bol 20 de centrifugeuse ainsi qu'un convoyeur 22 de sortie des préformes alignées et redressées.

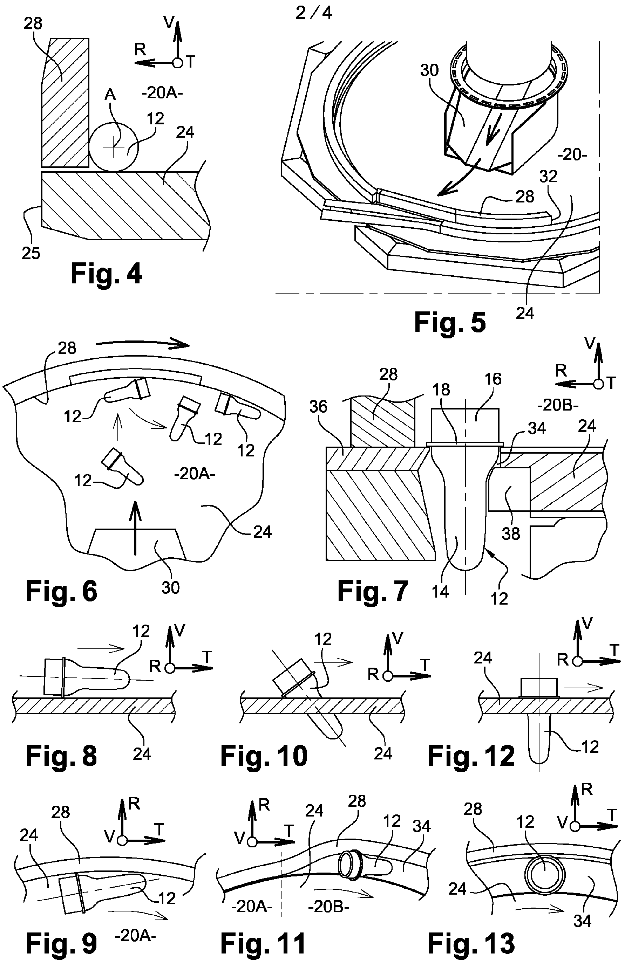

Le bol 20 de centrifugeuse comporte un plateau 24 circulaire horizontal tournant autour d'un axe "B" vertical central. Le plateau 24 tournant présente ainsi un bord 25 extérieur circulaire représenté à la figure 4. La face supérieure du plateau 24 tournant délimite verticalement vers le bas l'intérieur du bol 20 de centrifugeuse. Ainsi, le plateau 24 forme le fond du bol 20.

Le plateau 24 tournant présente un diamètre externe très supérieur aux dimensions des préformes 12.

Le plateau 24 tournant est entraîné en rotation à régime constant, ici dans un sens horaire en vue de dessus, par exemple par un moteur (non représenté) qui est agencé sous le plateau 24 tournant. La vitesse de rotation est par exemple commandée de manière que le bord 25 extérieur du plateau 24 tournant se déplace entre 2 et 3 m/s.

Le plateau 24 tournant est ici porté par une table 26 de support. La table 26 de support présente des pieds qui sont avantageusement réglables en hauteur pour permettre de régler l'assiette du plateau 24 tournant.

Le bol 20 de centrifugeuse est délimité radialement vers l'extérieur par une rambarde 28 périphérique fixe, qui est ici fixée à la table 26 de support. Cette rambarde 28 a notamment pour première fonction de retenir les préformes projetées vers l'extérieur par la force centrifuge produite par la rotation du plateau 24 tournant et pour deuxième fonction de guider le déplacement des préformes 12 jusqu'à un passage 32 de sortie du bol 20.

Les préformes 12 sont destinées à être déversées en vrac sur le plateau 24 tournant par l'intermédiaire d'un déversoir 30 fixe. Le déversoir 30 est ici agencé au centre du plateau 24 tournant. Le déversoir 30 est conçu pour déverser les préformes 12 en vrac, radialement en direction d'une première portion 28A de réception de la rambarde 28. Le déversoir 30 se présente ici sous la forme d'un toboggan alimenté en préformes 12 par le haut, par l'intermédiaire d'un tapis élévateur (non représenté). Le haut du déversoir 30 présente néanmoins une hauteur relativement faible ; il se situe par exemple à environ 40 cm au-dessus du plateau 24.

Comme cela est illustré à la figure 3, pour les besoins de la description, on divisera le bol en trois zones fixes par rapport à la table 26, chacune formée par un secteur angulaire s'étendant autour de l'axe "B" du plateau 24 tournant.

Un premier secteur 20A angulaire, dit d'alignement des préformes 12, s'étend face à la sortie du déversoir 30. Ce secteur 20A angulaire d'alignement inclut la portion 28A de réception de la rambarde 28.

Un deuxième secteur 20B angulaire, de redressement des préformes 12 alignées, est agencé directement en aval du premier secteur 20A angulaire d'alignement. De manière non limitative, il s'étend ici globalement à 180°.

Un troisième secteur 20C angulaire, de triage des préformes incorrectement alignées, est agencé directement en aval du deuxième secteur 20B angulaire de redressement et directement en amont du premier secteur 20A angulaire d'alignement. A l'extrémité aval de ce secteur 20C de triage, le passage 32 de sortie des préformes 12 est ouvert dans la rambarde 28 pour permettre de guider les préformes 12 correctement alignées et redressées vers le convoyeur 22. Le convoyeur 22 passe ici derrière la portion 28A de réception de la rambarde 28.

La dénomination de chacun de ces secteurs 20A, 20B, 20C fournit une indication sur leur fonction. On comprendra par la suite que des préformes 12 non alignées au niveau du premier secteur 20A angulaire peuvent néanmoins être alignées et redressées au niveau du deuxième secteur 20B angulaire selon les circonstances.

Sur toute la périphérie du premier secteur 20A angulaire d'alignement, un jeu de fonctionnement est réservé entre la rambarde 28 et le plateau 24 tournant. Ce jeu permet la rotation du plateau 24 tournant, mais il est toutefois suffisamment faible pour retenir la totalité du corps de la préforme 12 à l'intérieur du bol 20. Ce jeu est ainsi inférieur au diamètre "D3" minimal du corps 14 de la préforme 12.

Comme représenté à la figure 4, sur ce secteur 20A d'alignement, la rambarde 28 s'étend verticalement au-dessus du plateau 24 tournant, de sorte que le bord 25 externe du plateau 24 tournant est agencé à l'extérieur du bol 20 de centrifugeuse.

Lors du fonctionnement du dispositif 10, comme représenté aux figures 5 et 6, lors d'une première étape de déversements, les préformes 12 déversées en vrac par le déversoir 30 sont projetées radialement contre une portion 28A de réception de la rambarde 28, sous l'effet conjugué de leur vitesse radiale de glissement en sortie du déversoir 30 et de la force centrifuge produite par la rotation du plateau 24 tournant. Dans le même temps, le plateau 24 tournant commence aussi à entraîner dans sa rotation les préformes 12 tangentiellement vers l'aval.

Lors d'une deuxième étape d'alignement, les préformes 12 sont maintenues à l'intérieur du bol 20 par la rambarde 28, puis, après un ou plusieurs rebonds contre la rambarde 28, les préformes 12 perdent progressivement de la vitesse selon la direction radiale. Elles sont alors constamment maintenues radialement contre la rambarde par la force centrifuge. Sur la figure 6, est représenté le trajet suivi par une même préforme 12 depuis son arrivée via le déversoir 30 jusqu'à sa position stable contre la rambarde 28. Depuis cette position stable, les préformes 12 sont entraînées en déplacement purement tangentiel dans un sens horaire par le plateau 24 tournant le long de la rambarde 28.

Dans cette configuration, les préformes 12 occupent naturellement la position la plus stable dans laquelle leur axe "A" principal est orienté selon une direction tangente par rapport au plateau 24 tournant.

La plupart des préformes 12 présentes dans le secteur 20A angulaire d'alignement du bol 20 sont ainsi alignées tangentiellement contre la rambarde 28, leur axe "A" principal étant orienté sensiblement tangentiellement à leur direction de déplacement. L'écart tangentiel entre deux préformes 12 alignées successives est aléatoire, car le plateau 24 tournant est parfaitement plan et ne présente pas de crans d'indexation des préformes 12. Les préformes 12 peuvent ainsi être en contact par leurs extrémités sous l'effet de la force centrifuge qui oblige les préformes 12 à glisser les unes par rapport aux autres. Les préformes 12 occupent ainsi de manière optimale toute la longueur périphérique du bol 20.

A ce stade, les préformes 12 sont orientées aléatoirement col vers l'amont ou vers l'aval, sans incidence pour la suite du procédé. Les préformes 12 ainsi alignées poursuivent leur déplacement périphérique dans le secteur 20B de redressement.

Le fait que les préformes 12 soient maintenues sur le plateau 24 tournant permet de les conserver plaquées radialement contre la rambarde 28. Ainsi, les préformes 12 sont guidées de manière stable par la rambarde 28 durant leur déplacement autour du bol 20.

Comme représenté à la figure 7, sur le deuxième secteur 20B angulaire de redressement du bol 20 de centrifugeuse, le bol 20 comporte des moyens de redressement des préformes 12. Les moyens de redressement comportent un interstice 34 périphérique formé par écartement radial de la rambarde 28 par rapport au bord 25 externe du plateau 24 tournant. La largeur radiale de l'interstice 34 est comprise entre le diamètre "D2" maximal du corps 14 et le diamètre "D1" de la face 18 de support, dans le cas présent de la collerette. Cet interstice 34 se prolonge jusqu'au passage 32 de sortie des préformes 12.

Au moins tout le long du deuxième secteur 20B de redressement, la rambarde 28 présente un rail 36 de support de la face 18 de support. Le rail 36 s'étend en saillie radialement vers l'intérieur au même niveau que la face supérieure du plateau 24 tournant pour délimiter l'interstice 34 vers l'extérieur. Le rail 36 se prolonge ici jusqu'au passage 32 de sortie.

Ainsi, les préformes 12 sont susceptibles d'être soutenues par leur face 18 de support, dans le cas présent par leur collerette, qui repose en deux points diamétralement opposés sur la face supérieure horizontale du plateau 24 tournant, d'une part, et sur une face supérieure horizontale du rail 36, d'autre part, le corps 14 des préformes 12 pendant sous le niveau du plateau 24 tournant à travers ledit interstice 34. Les deux points d'appui sont alignés radialement. Le rail 36 permet de soutenir les préformes 12 de manière stable.

Ainsi, lors d'une troisième étape, dite de redressement, comme représenté aux figures 8 et 9, les préformes 12 alignées lors de la deuxième étape arrivent depuis le premier secteur 20A d'alignement en étant alignées en une file le long de la rambarde 28, avec leur axe "A" principal orienté tangentiellement. Les préformes 12 alignées sont disposées aléatoirement col 16 en amont ou col 16 en aval sans que cela n'ait d'influence sur leur redressement.

Lorsque le corps 14 de chaque préforme 12 arrive au-dessus de l'interstice 34, le corps 14 commence à tomber, comme représenté aux figures 10 et 11, faisant ainsi basculer la préforme 12 autour d'un axe radial passant par les points d'appui de la face 18 de support, dans le cas présent de la collerette, de la préforme. Le basculement se poursuit jusqu'à ce que l'axe "A" principal de la préforme 12 soit vertical, éventuellement après quelques balancement autour de l'axe radial. La préforme 12 est alors soutenue par sa face 18 de support reposant conjointement sur le rail 36 et sur le plateau 24 tournant, comme indiqué aux figures 12 et 13. La préforme 12 se retrouve alors redressée, col 16 en haut. La préforme 12 est ainsi guidée, extérieurement, par le rail 36 de la rambarde 28 et elle est guidée, intérieurement, par le bord 25 périphérique du plateau 24 tournant.

Lors du basculement, l'axe "A" principal de la préforme 12 demeure dans un plan vertical tangent au déplacement. Du fait du basculement de l'axe "A" principal dans le sens de déplacement des préformes 12, la face 18 de support de chaque préforme 12 demeure en permanence en contact avec le plateau 24 tournant, d'une part, et avec le rail 36, d'autre part, par ses deux points d'appui. Ainsi, chaque préforme 12 est guidée de manière stable et efficace durant son redressement.

Comme représenté à la figure 11, une zone de transition est prévue à l'extrémité amont du secteur 20B angulaire de redressement. Dans cette zone de transition, la largeur de l'interstice 34 évolue progressivement jusqu'à atteindre sa largeur finale. Pour ce faire, la rambarde 28 s'éloigne radialement progressivement de l'axe "B" de rotation du plateau 24 tournant. Ceci permet aux préformes 12 alignées de rester constamment en contact avec la rambarde 28 sous l'effet de la force centrifuge. Les préformes 12 sont ainsi guidées en position alignée de manière stable même pendant leur redressement.

Si la rambarde 28 présentait une discontinuité, elle ne pourrait plus remplir son rôle de guidage au niveau de cette discontinuité. Les préformes 12 correctement alignées risqueraient alors de tressauter et de se retrouver mal positionnées, venant par exemple en appui en biais contre des préformes adjacentes, empêchant alors le redressement de ces dernières.

Les préformes 12 ainsi redressées sont entraînées en rotation autour de leur axe principal par frottement contre le bord 25 externe du plateau 24 périphérique. Les préformes 12 sont ainsi déplacées autour du bol 20 dans le sens de rotation du plateau 24 tournant par roulement contre la rambarde 28 périphérique.

Pour améliorer ce phénomène de roulement des préformes 12 et ainsi augmenter leur vitesse d'avancement 12 autour du plateau 24, le bord 25 externe du plateau 24 tournant comporte avantageusement une bande 38 de roulement, qui présente un coefficient de frottement adapté pour permettre le roulement sans glissement du corps 14 des préformes 12 contre la bande 38 de roulement. Un tel agencement est par exemple représenté à la figure 7.

En variante non représentée de l'invention, qui peut remplacer l'agencement de la figure 7 ou être combiné avec ce même agencement, la rambarde est équipée d'une bande de roulement similaire, qui est destinée à venir au contact du corps de préformes redressées.

Les préformes 12 redressées et alignées sont ainsi acheminées vers le troisième secteur 20C, de triage, dans lequel les préformes 12N mal alignées sont réexpédiées directement vers le premier secteur 20A d'alignement par différents moyens de triage, tels que des roues démêleuses 40, 42 et un déflecteur 44.

Les moyens de triage permettent d'éjecter activement les préformes 12N incorrectement alignées vers le secteur 20A angulaire d'alignement afin de permettre leur retour direct dans le flux des préformes arrivant en vrac par le déversoir 30. L'adverbe "activement" signifie que les moyens de triage sont aptes à fournir une impulsion aux préformes 12N non alignées pour les repousser rapidement vers le premier secteur 20A angulaire.

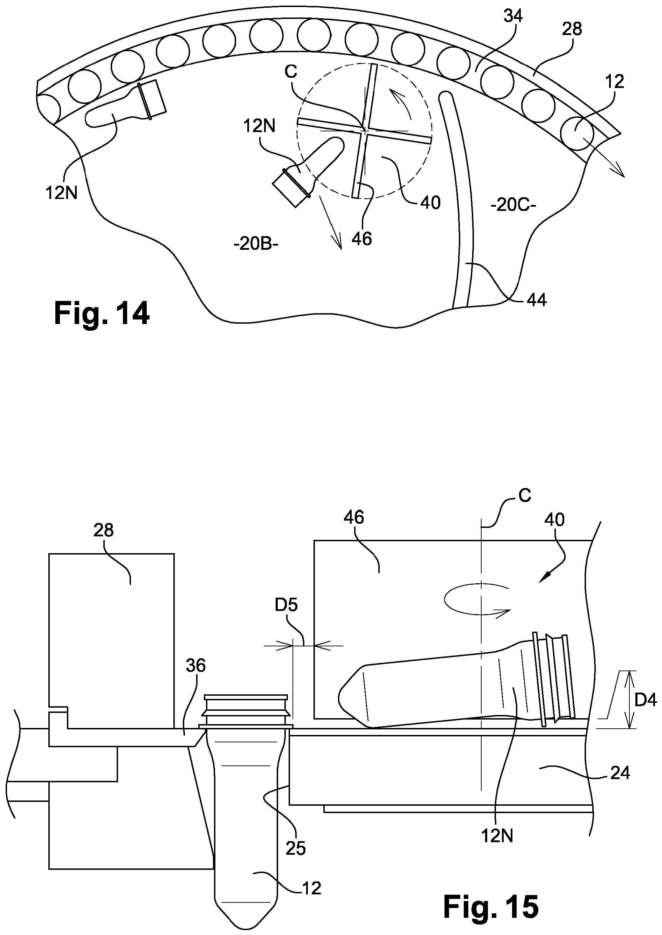

Comme représenté plus en détail à la figure 14, des premier moyens de triage sont ainsi formés par une première roue 40 à palettes 46 dite "roue démêleuse principale", qui est agencée tournante dans le bol 20, au-dessus du plateau 24 tournant autour d'un axe "C" fixe. Il s'agit ici d'un axe "C" vertical. L'espace balayé par les palettes 46 est ainsi cylindrique d'axe "C" vertical. La roue 40 démêleuse principale est agencée à une extrémité amont du troisième secteur 20C angulaire de triage.

Cette roue 40 démêleuse principale permet d'écarter les préformes 12N non alignées, qui sont toujours couchées sur le plateau 24 tournant et appuyées radialement contre les cols 16 des préformes 12 correctement alignées. Ces préformes 12N non alignées présentent ainsi au moins une partie qui fait saillie radialement vers le centre du plateau 24 tournant par rapport aux cols 16 des préformes 12 correctement alignées.

L'espace balayé par les palettes 46 exclut le passage des cols 16 des préformes 12 correctement alignées, ledit passage s'étendant au-dessus de l'interstice 34. En revanche, chaque palette 46 balaie un espace qui est situé au-dessus du plateau 24 tournant à une distance "D4" verticale inférieure au diamètre "D3" minimal d'une préforme 12, et à une distance "D5" radiale du bord 25 du plateau 24 tournant qui est inférieure au diamètre "D3" minimal d'une préforme 12. Ceci permet d'éjecter les préformes 12N incorrectement alignées globalement en direction du centre du plateau 24 tournant, comme cela est représenté à la figure 15. A cet effet, la roue 40 démêleuse principale tourne à contre sens par rapport au plateau 24 tournant.

Les moyens de triage comportent aussi un déflecteur 44 fixe, qui est agencé au-dessus du plateau 24 tournant à une distance verticale inférieure à celle du diamètre "D3" minimal du corps 14 des préformes 12, pour guider les préformes 12N éjectées par la roue 40 démêleuse principale en direction du premier secteur 20A angulaire. Lesdites préformes 12N non alignées sont guidées par le déflecteur 44 jusqu'en aval du passage 32 de sortie selon le sens de rotation du plateau 24 tournant. Ceci permet d'éviter que des préformes 12N non alignées se retrouvent "bloquées" dans ce troisième secteur 20C angulaire de triage.

Comme cela est représenté à la figure 3, le déflecteur 44 s'étend ainsi depuis le bord 25 externe du plateau 24 tournant, juste en aval de la roue 40 démêleuse principale. Il se présente sous la forme d'un bras de spirale orienté vers le centre du plateau 24 tournant, en aval du passage 32 de sortie. Un intervalle est réservé radialement entre l'extrémité aval du déflecteur 44 et le déversoir 30 pour permettre le retour des préformes 12N éjectées par la roue 40 démêleuse principale vers le premier secteur 20A angulaire d'alignement.

Le déflecteur 44 garantit que, dans l'espace délimité entre la face aval du déflecteur 44 et la rambarde 28, aucune préforme 12N incorrectement alignée ne soit couchée sur le plateau 24 tournant.

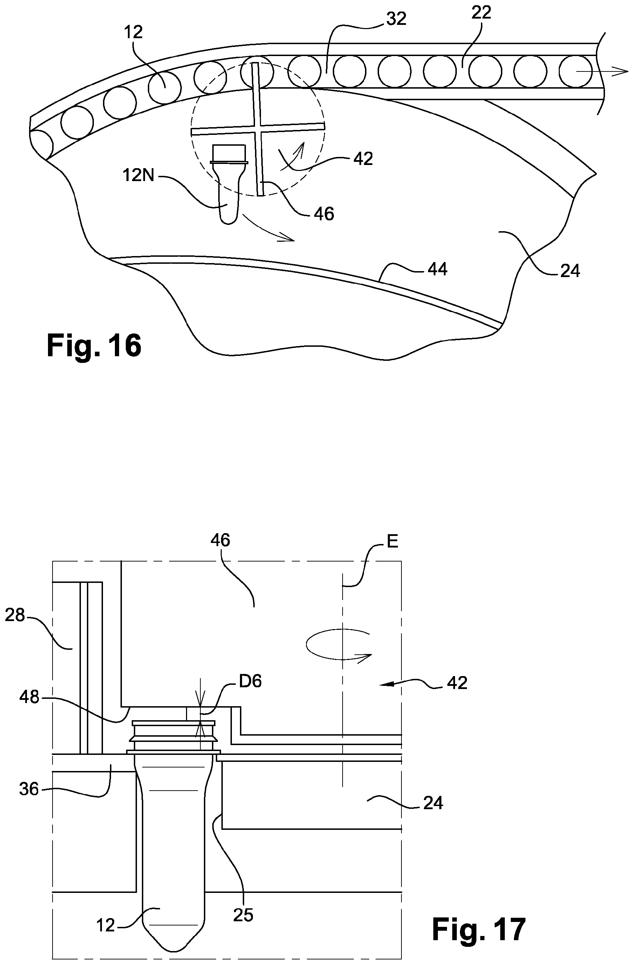

Les moyens de triage comportent aussi une deuxième roue 42 à palettes 46, dite roue 42 démêleuse secondaire, qui est interposée entre le déflecteur 44 et le passage 32 de sortie selon le sens de rotation du plateau 24 tournant. Dans le mode de réalisation représenté à la figure 16, la roue 42 démêleuse secondaire est plus particulièrement agencée directement en amont du passage 32 de sortie, de manière que les préformes 12N éjectées soient projetées directement contre la portion 28A de réception de la rambarde 28 sans risquer d'atteindre le passage 32 de sortie.

Cette deuxième roue 42 à palettes est destinée à éjecter des préformes 12N emboîtées qui défilent avec les préformes 12 correctement alignées, ou encore des préformes 12N couchées sur les cols 16 des préformes 12 correctement alignées.

La roue 42 démêleuse secondaire tourne ici autour d'un axe vertical "E". L'espace balayé par les palettes 16 est ainsi cylindrique d'axe "E".

Chaque palette 46 balaie un espace qui s'étend verticalement au-dessus et à proximité du col des préformes alignées correctement, à une distance "D6" inférieure au diamètre minimal d'une préforme 12N ou à la hauteur du col de ladite préforme 12N.

Chaque palette 46 présente à son extrémité libre une découpe 48 correspondant à la dimension d'un col 16 de préforme 12 qui se trouve alignée correctement, comme cela est illustré à la figure 17. Ceci permet non seulement d'éjecter les préformes emboîtées, mais aussi de garantir que ces préformes seront correctement éjectées sans possibilité de passer sous les palettes 46.

Comme représenté aux figures, le convoyeur 22 est raccordé tangentiellement au plateau dans la continuité du passage 32 de sortie des préformes 12 redressées. Le convoyeur 22 comporte une glissière horizontale, formée d'un rail externe qui prolonge le rail 36 de la rambarde 28, et d'un rail parallèle interne qui prolonge tangentiellement le bord 25 externe du plateau 24 tournant. Les rails sont écartés de manière à supporter une préforme 12 redressée par sa face 18 de support, dans le cas présent par sa collerette. Cet agencement permet d'évacuer les préformes 12 redressées en une file sans jamais cesser de les guider.

Le convoyeur 22 peur aussi comporter un dispositif de soufflerie (non représenté) qui permet de mouvoir les préformes 12 redressées. A cet effet, le dispositif de soufflerie comporte plusieurs évents qui soufflent de l'air vers les préformes 12 pour les pousser vers l'aval.

En variante, le convoyeur peut être équipé de tout autre moyen connu de déplacement des préformes alignées et redressées.

Le guidage constant des préformes à toutes les étapes du procédé et lors de la transition entre chacune des étapes permet de garantir que les préformes 12 seront déplacées de manière stable. Ceci permet notamment de faire tourner le plateau 24 tournant à grande vitesse pour augmenter le débit des préformes 12 sans risquer de désaligner des préformes 12 correctement alignées.

En outre, les préformes ne sont pas poussées par des éléments d'indexation. De ce fait, les préformes 12 se déplacent sans risque de grippage ou de coincement.

Le dispositif selon l'invention est susceptible d'être adapté facilement à différents modèles de préformes. Il suffit en effet de remplacer des segments de rambarde 28 afin d'adapter la largeur de l'interstice 34 à la dimension du corps 14 et de la face 18 de support de chaque modèle, ainsi que de remplacer les bandes 38 de roulement associées. De tels segments sont aisés à fabriquer et rapides à changer.

## Revendications

1. Procédé d'alignement en une file et de redressement de préformes (12), notamment de préformes en matériau thermoplastique destinées à être conformées en récipients finaux par une station de formage, le procédé étant destiné à être appliqué à des préformes (12) axisymétriques présentant une face (18) annulaire de support et un corps (14) de diamètre inférieur au diamètre de ladite face (18) de support, le procédé comportant :
- une première étape, de déversement de préformes (12) en vrac sur un plateau (24) horizontal tournant ;
- une deuxième étape, d'alignement des préformes (12) contre une rambarde (28) périphérique fixe par la force centrifuge produite par la rotation du plateau (24) tournant, les préformes (12) étant entraînée en déplacement par le plateau (24) tournant le long de ladite rambarde (28) contre laquelle elles sont maintenues par la force centrifuge, chaque préforme (12) alignée contre la rambarde (28) de guidage présentant un axe (A) principal orienté sensiblement horizontalement ;
- une troisième étape, de redressement successif des préformes (12) alignées par basculement du corps (14) des préformes sous leur face (18) annulaire de support jusqu'à ce que leur axe (A) principal de la préforme soit vertical, chaque préforme (12) étant soutenue par sa face (18) de support entre deux points d'appui opposés ;
**caractérisé en ce que**, lors de la deuxième étape d'alignement, l'axe (A) principal des préformes (12) est orienté sensiblement tangentiellement à leur direction de déplacement jusqu'à leur redressement.

2. Procédé selon la revendication précédente, **caractérisé en ce que** les préformes (12) redressées sont entraînées en rotation autour de leur axe (A) principal par frottement contre un bord (25) externe du plateau (24) tournant, les préformes (12) étant ainsi déplacées autour du bol (20) dans le sens de rotation du plateau (24) tournant par roulement contre la rambarde (28) périphérique.

3. Dispositif (10) d'alignement en une file et de redressement de préformes (12) pour la mise en œuvre du procédé selon l'une quelconque des revendications précédentes, le dispositif (10) étant destiné à être appliqué à des préformes (12) axisymétriques présentant une face (18) annulaire de support et un corps (14) de diamètre inférieur au diamètre de ladite face (18) de support, le dispositif (10) présentant un bol (20) de centrifugeuse comportant :
- un plateau (24) circulaire horizontal tournant autour d'un axe vertical ;
- une rambarde (28) périphérique fixe pour retenir les préformes (12) projetées par la force centrifuge ;
- un déversoir (30) de préformes (12) qui déverse les préformes (12) en vrac sur le plateau (24) tournant en direction d'une première portion (28A) de réception de la rambarde (28) ;
le dispositif (10) comprenant en outre des moyens de redressement desdites préformes (12),
**caractérisé en ce que**, sur un premier secteur (20A) angulaire déterminé du bol (20) incluant la portion (28A) de réception, la rambarde (28) est disposée à proximité du plateau (24) de façon à réserver entre la rambarde (28) et le plateau (24) tournant un jeu inférieur à un diamètre minimal du corps (14) de la préforme (12), ce par quoi la rambarde peut retenir le corps (14) des préformes (12) sur le plateau (24) tournant et à l'intérieur du bol (20) à l'encontre de la force centrifuge produite par la rotation du plateau (24) tournant et **en ce que** sur un deuxième secteur (20B) angulaire du bol, agencé directement en aval du premier secteur (20A) angulaire, le bol (20) présente lesdits moyens de redressement des préformes.

4. Dispositif selon la revendication précédente, **caractérisé en ce que**, au moins à la périphérie du premier secteur (20A) déterminé du bol (20), la rambarde (28) s'étend verticalement au-dessus du plateau (24) tournant.

5. Dispositif selon l'une quelconque des revendications 3 à 4, **caractérisé en ce que**, lesdits moyens de redressement desdites préformes (12) comportant un interstice (34) périphérique formé par écartement radial de la rambarde (28) par rapport au bord (25) externe du plateau (24) tournant, ledit interstice présentant une largeur radiale dont la valeur est comprise entre le diamètre du corps (14) et le diamètre de la face (18) de support pour permettre le basculement du corps (14) des préformes (12) sous le niveau du plateau (24) tournant à travers ledit interstice (34), la face (18) de support étant destinée à être soutenue de manière conjointe par le plateau (24) tournant et par la rambarde (28).

6. Dispositif selon la revendication précédente, **caractérisé en ce que** la rambarde (28) présente un rail (36) de support de la face (18) de support qui s'étend au moins sur le deuxième secteur (20B) angulaire du bol (20), le rail (36) s'étendant au même niveau que le plateau (24) tournant pour délimiter extérieurement l'interstice (34).

7. Dispositif selon la revendication précédente, **caractérisé en ce que** le bord (25) externe du plateau (24) tournant et/ou la rambarde (28) comportent une bande (38) de roulement qui présente un coefficient de frottement adapté pour permettre le roulement sans glissement de la préforme (12) contre la bande (38) de roulement.

8. Dispositif selon l'une quelconque des revendications 3 à 7, **caractérisé en ce qu'**il comporte un convoyeur (22) qui est raccordé tangentiellement au plateau (24) tournant à un passage (32) de sortie des préformes (12) redressées ouvert dans la rambarde (28) en aval du deuxième secteur (20B) déterminé.

9. Dispositif selon la revendication précédente, **caractérisé en ce que** le convoyeur (22) est formé par une glissière horizontale formée d'un rail externe qui prolonge le rail (36) de la rambarde (28) et d'un rail parallèle interne qui prolonge tangentiellement le bord (25) externe du plateau (24) tournant, les rails étant écartés de manière à supporter une préforme (12) redressée par sa face (18) de support.

10. Dispositif selon la revendication précédente, **caractérisé en ce que** les préformes (12) redressées qui sont transférées sur le convoyeur (22) sont mues par un dispositif de soufflerie.

## Patentansprüche

1. Verfahren zur Ausrichtung in einer Reihe und zur Aufrichtung von Vorformen (12), insbesondere von Vorformen aus einem thermoplastischen Material, die dazu bestimmt sind, durch eine Formungsstation zu fertigen Behältern ausgebildet zu werden, wobei das Verfahren dazu bestimmt ist, auf achsensymmetrische Formen (12) angewendet zu werden, die eine ringförmige Stützfläche (18) und einen Körper (14) mit einem Durchmesser kleiner als der Durchmesser der Stützfläche (18) aufweisen, wobei das Verfahren Folgendes umfasst:
- einen ersten Schritt des Ausschüttens von Vorformen (12) in Form von Schüttgut auf eine sich drehende horizontale Scheibe (24);
- einen zweiten Schritt des Ausrichtens der Vorformen (12) an einer festen umlaufenden Reling (28) mittels der durch die Rotation der Drehscheibe (24) erzeugten Zentrifugalkraft, wobei die Vorformen (12) durch die Drehscheibe (24) entlang der Reling (28), an der sie durch die Zentrifugalkraft gehalten werden, in Bewegung versetzt werden, wobei jede an der Führungsreling (28) ausgerichtete Vorform (12) eine Hauptachse (A) aufweist, die im Wesentlichen horizontal orientiert ist;
- einen dritten Schritt des sukzessiven Aufrichtens der ausgerichteten Vorformen (12) durch Kippen des Körpers (14) der Vorformen unter ihre ringförmige Stützfläche (18), bis ihre Hauptachse (A) der Vorform vertikal ist, wobei jede Vorform (12) durch ihre Stützfläche (18) zwischen zwei gegenüberliegenden Auflagepunkten gehalten wird;
**dadurch gekennzeichnet, dass** die Hauptachse (A) der Vorformen (12) während des zweiten Schritts des Ausrichtens bis zu ihrer Aufrichtung im Wesentlichen tangential zu ihrer Bewegungsrichtung orientiert ist.

2. Verfahren nach dem vorhergehenden Anspruch, **dadurch gekennzeichnet, dass** die aufgerichteten Vorformen (12) durch Reibung an einem Außenrand (25) der Drehscheibe (24) um ihre Hauptachse (A) in Drehung versetzt werden, sodass die Vorformen (12) durch Abrollen an der umlaufenden Reling (28) in der Rotationsrichtung der Scheibe (24) rund um die Wanne (20) bewegt werden.

3. Vorrichtung (10) zur Ausrichtung in einer Reihe und zur Aufrichtung von Vorformen (12) für die Implementierung des Verfahrens nach einem der vorhergehenden Ansprüche, wobei die Vorrichtung (10) dazu bestimmt ist, auf achsensymmetrische Vorformen (12) angewendet zu werden, die eine ringförmige Stützfläche (18) und einen Körper (14) mit einem Durchmesser kleiner als der Durchmesser der Stützfläche (18) aufweisen, wobei die Vorrichtung (10) eine Zentrifugenwanne (20) aufweist, die Folgendes umfasst:
- eine horizontale kreisförmige Scheibe (24), die sich um eine vertikale Achse dreht;
- eine feste umlaufende Reling (28), um die durch die Zentrifugalkraft weggeschleuderten Vorformen (12) zurückzuhalten;
- eine Einheit zum Ausschütten (30) von Vorformen (12), die die Vorformen (12) in Form von Schüttgut in Richtung eines ersten Aufnahmeabschnitts (28A) der Reling (28) auf die Drehscheibe (24) ausschüttet;
wobei die Vorrichtung (10) ferner Mittel zur Aufrichtung der Vorformen (12) beinhaltet,
**dadurch gekennzeichnet, dass** in einem ersten vorgegebenen Winkelsektor (20A) der Wanne (20), der den Aufnahmeabschnitt (28A) umfasst, die Reling (28) nahe der Scheibe (24) angeordnet ist, sodass zwischen der Reling (28) und der Drehscheibe (24) ein Spiel vorgesehen ist, das kleiner als ein Mindestdurchmesser des Körpers (14) der Vorform (12) ist, wodurch die Reling den Körper (14) der Vorformen (12) entgegengesetzt zu der durch die Rotation der Drehscheibe (24) erzeugten Zentrifugalkraft auf der Drehscheibe (24) und innerhalb der Wanne (20) zurückhalten kann, und dass in einem zweiten Winkelsektor (20B) der Wanne, der direkt an den ersten Winkelsektor (20A) anschließend eingerichtet ist, die Wanne (20) die Mittel zur Aufrichtung der Vorformen (12) aufweist.

4. Vorrichtung nach dem vorhergehenden Anspruch, **dadurch gekennzeichnet, dass** sich die Reling (28) mindestens am Umfang des ersten vorgegebenen Sektors (20A) der Wanne (20) vertikal oberhalb der Drehscheibe (24) erstreckt.

5. Vorrichtung nach einem der Ansprüche 3 bis 4, **dadurch gekennzeichnet, dass** die Mittel zur Aufrichtung der Vorformen (12) einen umlaufenden Spalt (34) umfassen, der durch eine radiale Beabstandung der Reling (28) mit Bezug auf den Außenrand (25) der Drehscheibe (24) gebildet ist, wobei der Spalt eine radiale Breite aufweist, deren Wert zwischen dem Durchmesser des Körpers (14) und dem Durchmesser der Stützfläche (18) liegt, um das Kippen des Körpers (14) der Vorformen (12) durch den Spalt (34) unter die Ebene der Drehscheibe (24) zu gestatten, wobei die Stützfläche (18) dazu bestimmt ist, von der Drehscheibe (24) und der Reling (28) gemeinsam gehalten zu werden.

6. Vorrichtung nach dem vorhergehenden Anspruch, **dadurch gekennzeichnet, dass** die Reling (28) eine Stützschiene (36) für die Stützfläche (18) aufweist, die sich mindestens über den zweiten Winkelsektor (20B) der Wanne (20) erstreckt, wobei sich die Schiene (36) auf derselben Ebene wie die Drehscheibe (24) erstreckt, um den Spalt (34) nach außen hin abzugrenzen.

7. Vorrichtung nach dem vorhergehenden Anspruch, **dadurch gekennzeichnet, dass** der Außenrand (25) der Drehscheibe (24) und/oder die Reling (28) einen Abrollstreifen (38) umfassen, der einen Reibungskoeffizienten aufweist, der dazu angepasst ist, das rutschfreie Abrollen der Vorform (12) an dem Abrollstreifen (38) zu gestatten.

8. Vorrichtung nach einem der Ansprüche 3 bis 7, **dadurch gekennzeichnet, dass** sie eine Fördereinheit (22) umfasst, die tangential zu der Drehscheibe (24) mit einem Auslassdurchgang (32) für die aufgerichteten Vorformen (12) verbunden ist, welcher in der Reling (28) an den vorgegebenen zweiten Sektor (20B) anschließend eingebracht ist.

9. Vorrichtung nach dem vorhergehenden Anspruch, **dadurch gekennzeichnet, dass** die Fördereinheit (22) durch eine horizontale Gleitbahn gebildet ist, welche durch eine außen liegende Schiene, die die Schiene (36) der Reling (28) verlängert, und eine parallele innen liegende Schiene, die den Außenrand (25) der Drehscheibe (24) tangential verlängert, gebildet ist, wobei die Schienen so beabstandet sind, dass sie eine aufgerichtete Vorform (12) an ihrer Stützfläche (18) stützen.

10. Vorrichtung nach dem vorhergehenden Anspruch, **dadurch gekennzeichnet, dass** die aufgerichteten Vorformen (12), die auf der Fördereinheit (22) befördert werden, durch eine Blasvorrichtung bewegt werden.

## Claims

1. Method for aligning in a row and righting preforms (12), in particular preforms made of thermoplastic material that are intended to be shaped into final containers by a forming station, the method being intended to be applied to axisymmetric preforms (12) that have an annular support face (18) and a body (14) with a diameter smaller than the diameter of said support face (18), the method involving:
- a first step, of discharging preforms (12) in bulk onto a rotating horizontal plate (24);
- a second step, of aligning the preforms (12) against a fixed peripheral guard-bar (28) by the centrifugal force produced by the rotation of the rotating plate (24), the preforms (12) being driven in movement by the rotating plate (24) along said guard-bar (28) against which they are held by the centrifugal force, each preform (12) that is aligned against the guiding guard-bar (28) having a main axis (A) that is oriented substantially horizontally;
- a third step, of successively righting the aligned preforms (12) by tilting the body (14) of the preforms below their annular support face (18) until their main axis (A) of the preform is vertical, each preform (12) being supported via its support face (18) between two bearing points that are opposite one another;
**characterized in that**, during the second alignment step, the main axis (A) of the preforms (12) is oriented substantially tangentially to their direction of movement until they are righted.

2. Method according to the preceding claim, **characterized in that** the righted preforms (12) are driven in rotation about their main axis (A) by friction against an outer edge (25) of the rotating plate (24), the preforms (12) thus being moved around the bowl (20) in the direction of rotation of the rotating plate (24) by rolling against the peripheral guard-bar (28).

3. Device (10) for aligning in a row and righting preforms (12), for implementing the method according to either one of the preceding claims, the device (10) being intended to be applied to axisymmetric preforms (12) that have an annular support face (18) and a body (14) with a diameter smaller than the diameter of said support face (18), the device having a centrifuge bowl (20) having:
- a horizontal circular plate (24) rotating about a vertical axis;
- a fixed peripheral guard-bar (28) for retaining the preforms (12) thrown by the centrifugal force;
- a chute (30) for preforms (12) that discharges the preforms (12) in bulk onto the rotating plate (24) in the direction of a first receiving portion (28A) of the guard-bar (28);
the device (10) also comprising means for righting said preforms (12),
**characterized in that**, over a first determined angular sector (20A) of the bowl (20) that includes the receiving portion (28A), the guard-bar (28) is disposed in the vicinity of the plate (24) so as to leave, between the guard-bar (28) and the rotating plate (24), a clearance smaller than a minimum diameter of the body (14) of the preform (12), whereby the guard-bar can retain the body (14) of the preforms (12) on the rotating plate (24) and inside the bowl (20), counter to the centrifugal force produced by the rotation of the rotating plate (24), and **in that**, over a second angular sector (20B) of the bowl (20), which is arranged directly downstream of the first angular sector (20A), the bowl (20) has said means for righting the preforms (12).

4. Device according to the preceding claim, **characterized in that**, at least at the periphery of the first determined sector (20A) of the bowl (20), the guard-bar (28) extends vertically above the rotating plate (24).

5. Device according to either one of Claims 3 and 4, **characterized in that** said means for righting said preforms (12) have a peripheral gap (34) formed by radial separation of the guard-bar (28) with respect to the outer edge (25) of the rotating plate (24), said gap having a radial width with a value that is between the diameter of the body (14) and the diameter of the support face (18) so as to allow the body (14) of the preforms (12) to tilt below the level of the rotating plate (24) through said gap (34), the support face (18) being intended to be supported jointly by the rotating plate (24) and by the guard-bar (28).

6. Device according to the preceding claim, **characterized in that** the guard-bar (28) has a rail (36) for supporting the support face (18) that extends at least over the second angular sector (20B) of the bowl (20), the rail (36) extending at the same level as the rotating plate (24) so as to externally delimit the gap (34) .

7. Device according to the preceding claim, **characterized in that** the outer edge (25) of the rotating plate (24) and/or the guard-bar (28) have a roll strip (38) that has a coefficient of friction suitable for allowing the preform (12) to roll against the roll strip (38) without slipping.

8. Device according to any one of Claims 3 to 7, **characterized in that** it has a conveyor (22) that is connected tangentially to the rotating plate (24) at an outlet passage (32) for the righted preforms (12) that opens into the guard-bar (28) upstream of the second determined sector (20B).

9. Device according to the preceding claim, **characterized in that** the conveyor (22) is formed by a horizontal slide formed from an external rail that extends the rail (36) of the guard-bar (28) and from a parallel internal rail that tangentially extends the outer edge (25) of the rotating plate (24), the rails being spaced apart so as to support a righted preform (12) via its support face (18).

10. Device according to the preceding claim, **characterized in that** the righted preforms (12) that are transferred onto the conveyor (22) are moved by a blower device.
